# EUROPÄISCHE PATENTANMELDUNG

(11) **EP 1 328 089 A1**
(43) Veröffentlichungstag der Anmeldung: **16.07.2003**
(21) Anmeldenummer: 02000898.3
(22) Anmeldetag: 15.01.2002
(51) Int. Cl.: H04L 12/56, H04Q 7/38, H04Q 7/22, H04Q 7/30

(54) **Verfahren zur Übertragung von Datenpaketen zwischen einem Netzarm eines IP-Datennetzes einerseits und an den Netzarm seriell angeschaltete Basisstation andererseits**

(71) Anmelder: SIEMENS AKTIENGESELLSCHAFT, 80333 München (DE)
(72) Erfinder: Cyranka, Oliver, 80336 München (DE)

(57) **Zusammenfassung**

Jeder einzelnen Basisstation werden abhängig von einer netzarmseitigen Datenpaketreihenfolge Verzögerungszeiten zugeordnet. Nach Inbetriebnahme einer Basisstation und nach Ablauf der jeweils zugeordneten Verzögerungszeit beginnt die Basisstation intern damit, Zeitintervalle abzuzählen. Bei vorbestimmten Zeitintervallen werden die den jeweiligen Basisstationen jeweils zugeordneten Datenpakete, die seriell aufeinanderfolgend netzarmseitig übertragen werden. zwischen Netzarm des IP-Datennetzes einerseits und der jeweiligen Basisstation andererseits übertragen.

Die Datenpakete werden netzseitig seriell aufeinanderfolgend in einer Multidrop-Konfiguration zu dem Basisstationen übertragen. Die Verzögerungszeit wird vorzugsweise derart gewählt, daß, abhängig von der seriellen Reihenfolge der den Basisstationen zugeordneten Datenpakete, jede Basisstation genau dann das ihr zugeordnete Datenpaket zur Abstrahlung anfordert, wenn das Datenpaket festnetzseitig zur Verfügung steht. Die Basisstationen arbeiten vortzugsweise nach dem GSM Standard. Bei den Datenpaketen handelt es sich vorzugsweise um GPRS-Daten oder Sprachdaten.

## Beschreibung

Verfahren zur Übertragung von Datenpaketen zwischen einem Netzarm eines IP Datennetzes einerseits und an den Netzarm seriell angeschaltete Basisstationen andererseits.

Die Erfindung betrifft ein Verfahren zur Übertragung von n Datenpaketen zwischen einem Netzarm eines IP Datennetzes einerseits und seriell an den Netzarm angeschalteten n Basisstationen anderseits, wobei die n Datenpakete einerseits seriell aufeinanderfolgend über den Netzarm und anderseits mit Hilfe eines Zeitschlitz-Vielfachzugriffsverfahrens von den n Basisstationen über ein Funknetz übertragen werden.

Bei Funkkommunikationssystemen werden derzeit Überlegungen durchgeführt, eine netzseitige Datenpaketübertragung zwischen den einzelnen Basisstationen und einem den Basisstationen zugeordneten gemeinsamen Basisstations-Controller mit Hilfe eines internetähnlichen Datennetzes zu verwirklichen. Bei einem derartigen IP-Datennetz soll mit Hilfe von Internetprotokollen die Datenpaketübertragung realisiert werden.

In einer Ausführungsform sind mehrere Basisstationen seriell aufeinanderfolgend an einem gemeinsamen Netzarm des IP-Datennetzes angeordnet, über den sie die jeweils den Basisstationen zugeordneten Datenpakete erhalten bzw. absenden. Die Datenpakete selbst werden netzseitig seriell aufeinanderfolgend in einer Multidrop-Konfiguration zu den Basisstationen übertragen.

Dabei kommt es bei Funkkommunikationssystemen, die mit Hilfe von Zeitschlitz-Vielfachzugriffsverfahren funknetzseitig Datenpakete übertragen (beispielsweise nach dem GSM-Standard ausgeprägten Funkkommunikationssystemen) zu Problemen bei der Datenpaketübertragung, die nachfolgend erläutert werden.

Wird beispielsweise eine erste GSM-Basisstation in Betrieb genommen, so beginnt sie ab ihrem Einschaltzeitpunkt intern damit, Zeitintervalle zu zählen. Bei bestimmten systembedingt vorgegebenen Zeitintervallen werden von der ersten Basisstation Datenpakete vom IP-Datennetz angefordert und diese mit Hilfe eines Zeitschlitz-Vielfachzugriffsverfahrens funknetzseitig abgestrahlt, bzw. es werden Datenpakete funknetzseitig empfangen und an das IP-Datennetz weitergeleitet.

Wird nun eine zweite GSM-Basisstation in Betrieb genommen, so beginnt auch sie mit der internen Zeitintervallzählung. Im ungünstigsten Fall sind bei beiden Basisstationen die jeweiligen Zeitintervalle, in denen die Datenpakete zwischen IP-Datennetz und Basisstation übertragen werden, identisch, und beide fordern zum gleichen Zeitpunkt Datenpakete aus dem IP-Datennetz an. Da die Datenpakete jedoch seriell durch das IP-Datennetz übertragen werden, ist eine gleichzeitige Versorgung der beiden Basisstationen mit Datenpaketen nicht ohne Verzögerungen möglich.

Dieses Problem wurde bisher dadurch gelöst, dass für die betroffenen Datenpakete festnetzseitig Pufferspeicher zur Zwischenspeicherung vorgesehen wurden. Nach der Zwischenspeicherung werden die einzelnen Datenpakete nacheinander an die jeweilige Basisstation weitergeleitet. Dieser Vorgang wird auch als "Queueing" bezeichnet.

Durch den Einsatz von festnetzseitigen Pufferspeichern erhöht sich jedoch die Laufzeit und die Verweildauer der Datenpakete im IP-Datennetz. Zusätzlich wird der Datendurchfluss pro Basisstation reduziert.

Die Aufgabe der vorliegenden Erfindung besteht nun darin, die Übertragung von Datenpaketen zwischen einem Netzarm eines IP-Datennetzes einerseits und an dem Netzarm seriell angeschalteten Basisstationen andererseits unter weitgehender Vermeidung einer Zwischenspeicherung zu optimieren.

Die Aufgabe der Erfindung wird durch die Merkmale des Anspruchs 1 gelöst. Vorteilhafte Weiterbildungen der Erfindung sind in den Unteransprüchen angegeben.

Durch die erfindungsgemäße Zuordnung einer Verzögerungszeit für jede einzelne Basisstation und die festnetzseitige Festlegung der Verzögerungszeiten werden Verweildauer und Laufzeiten der Datenpakete im IP-Datennetz verkürzt. Auf eine Zwischenspeicherung der Datenpakete wird weitgehend verzichtet und der Datendurchfluss dadurch maximiert.

Dabei wird die Verzögerungszeit festnetzseitig derart gewählt und an die einzelnen Basisstationen übertragen, dass, abhängig von der seriellen Reihenfolge der den Basisstationen zugeordneten Datenpakete, jede Basisstation genau dann das ihr zugeordnete Datenpaket zur Abstrahlung anfordert, wenn das Datenpaket festnetzseitig zur Verfügung steht (Datenpaketübertragung quasi "just in time").

Für den Fall der Datenpaketübertragung von der Basisstation an das IP-Datennetz gilt, dass von der Basisstation genau dann ein Datenpaket an das IP-Datennetz übertragen wird, wenn festnetzseitig eine der Basisstation fest zugeordnete Übertragungskapazität zur Verfügung steht.

Die Zuweisung der jeweiligen Verzögerungszeit erfolgt mit Hilfe einer Synchronisationsnachricht durch eine den Basisstationen gemeinsam zugeordneten Packet-Control-Unit. Diese ist beispielsweise festnetzseitig beim Basisstations-Controller angeordnet.

Das erfindungsgemäße Verfahren kommt bei jedem Funkkommunikationssystem zur Anwendung, das mit Hilfe von Zeitschlitz-Vielfachzugriffsverfahren Datenpakete überträgt, im speziellen bei nach dem GSM-Standard ausgeprägten Funkkommunikationssystemen, für die Übertragung von Sprache sowie von Daten nach dem GPRS-Standard.

Im Folgenden wird ein Ausführungsbeispiel der Erfindung anhand der Zeichnung näher erläutert. Dabei zeigt:
- FIG 1: eine GSM-Basisstation mit interner Zeitintervallzählung,
- FIG 2: eine Datenpaketübertragung mit vier GSM-Basisstationen gemäß dem Stand der Technik, und
- FIG 3: vergleichend zu FIG 2 eine erfindungsgemäße Datenpaketübertragung.

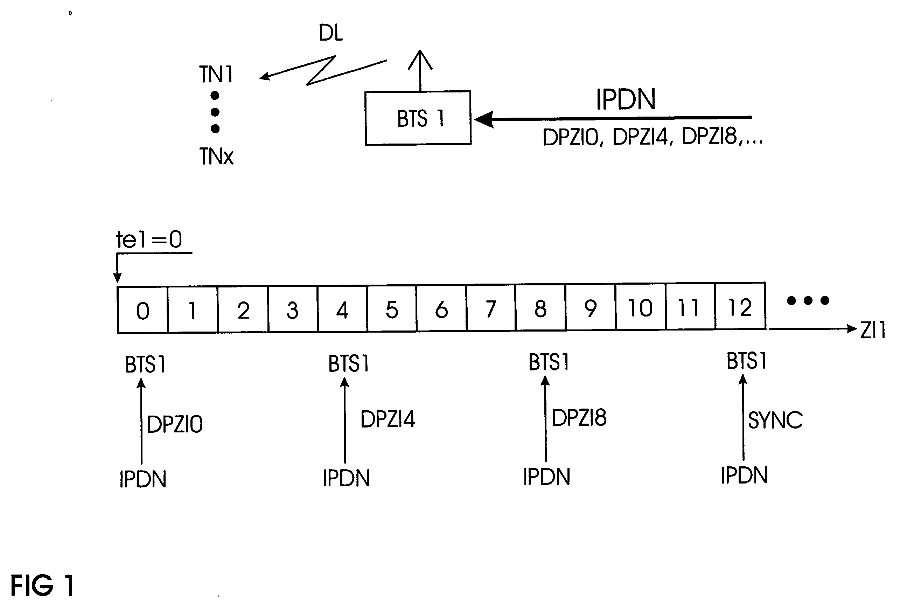

FIG 1 zeigt eine GSM-Basisstation BTS1 mit interner Zeitintervallzählung für eine Downlink-Verbindung DL.

Die Basisstation BTS1 wird zu einem Zeitpunkt te1=0 in Betrieb genommen und beginnt ab dem Zeitpunkt te1=0 intern damit, Zeitintervalle ZI1 zu zählen.

Beim Zeitintervall ZI1=0 wird ein erstes Datenpaket DPZI0 aus einem IP-Datennetz IPDN zur Basisstation BTS1 übertragen und dort während der Zeitintervalle ZI1=1 bis ZI1=3 zur Abstrahlung durch die Basisstation BTS1 vorbereitet, beispielsweise werden Daten des Datenpakets DPZI0, die Teilnehmern TN1 bis TNx zugeordnet sind, teilnehmerspezifisch verschlüsselt, "interleaved", aufgeteilt und abschließend funknetzseitig übertragen.

Gleiches erfolgt bei den Zeitintervallen ZI1=4 und ZI1=8, bei denen Datenpakete DPZI4 und DPZI8 festnetzseitig an die Basisstation BTS1 übertragen werden. Zum Zeitintervall ZI1=12 erfolgt keine Übertragung von Teilnehmerdaten, sondern es werden Synchronisationsdaten SYNC zur funknetzseitige Synchronisation mit Hilfe eines SACCH-Channels übertragen.
Die hier dargestellten Zeitintervalle ZI1 kehren also periodisch in einem "Modulo-13-UM-Frame" wieder.

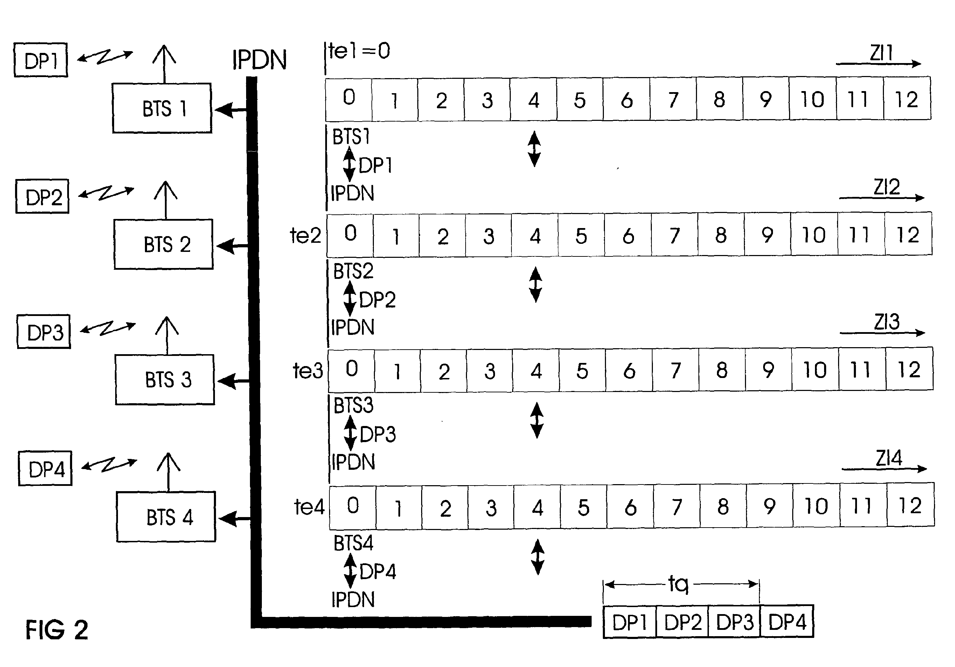

FIG 2 zeigt eine Datenpaketübertragung mit vier GSM-Basisstationen BTS1, BTS2, BTS3 und BTS4 gemäß dem Stand der Technik.
Vergleichend mit FIG 1 sind vier Basisstationen BTS1 bis BTS4 seriell aufeinanderfolgend an einem Netzarm des IP-Datennetzes IPDN angeschaltet, über den entsprechend zugeordnete Datenpakete festnetzseitig übertragen werden.

Der ersten Basisstation BTS1 ist ein erstes Datenpaket DP1 zugeordnet, das beispielsweise während einer Downlink-Verbindung beim Zeitintervall ZI1=0 vom IP-Datennetz IPDN zur ersten Basisstation BTS1 übertragen wird. Wie bereits aus FIG 1 bekannt, wird für die erste Basisstation BTS1 zum Zeitintervall ZI1=4 ein weiteres Datenpaket an die erste Basisstation BTS1 übertragen, usw.

Sinngemäß ist der zweiten Basisstation BTS2 ein Datenpaket DP2, der dritten Basisstation BTS3 ein Datenpaket DP3 und der vierten Basisstation BTS4 ein Datenpaket DP4 zugeordnet.

In FIG 2 ist für die vier Basisstationen BTS1 bis BTS4 der ungünstigste Fall dargestellt, bei dem alle vier Basisstationen BTS1 bis BTS4 zum gleichen Zeitpunkt in Betrieb genommen werden, also tel=te2=te3=te4=0.

Somit fordern beispielsweise für den Downlink alle vier Basisstationen BTS1 bis BTS4 zum gleichen Zeitintervall ZI1=ZI2=ZI3=ZI4=0 die ihnen jeweils zugeordneten Datenpakete DP1 bis DP4 aus dem IP-Datennetz IPDN an.
Für den Uplink gilt, dass alle vier Basisstationen BTS1 bis BTS4 die ihnen zugeordneten Datenpakete DP1 bis DP4 zum gleichen Zeitintervall ZI1=ZI2=ZI3=ZI4=0 festnetzseitig über das IP-Datennetz IPDN übertragen wollen.

Da die Datenpakete DP1 bis DP4 jedoch festnetzseitig seriell aufeinanderfolgend übertragen werden, müssen die einzelnen Datenpakete DP1 bis DP4 entsprechend zwischengespeichert werden - nicht dargestellt. Durch die Zwischenspeicherung ergibt sich beispielsweise für das Datenpaket DP4 ein sogenanntes "Queueing-Delay" von drei Datenpaketdauern, da zuerst die Datenpakete DP1 bis DP3 seriell abgearbeitet (übertragen) werden müssen.

Die festnetzseitigen Übertragungszeitpunkte sind nach dem systembedingten Modulo-13-Schema abhängig von der Inbetriebnahme der jeweiligen Basisstation und starr festgelegt. Sie haben keinen Bezug zur festnetzseitigen Übertragungsreihenfolge der Datenpakete DP1 bis DP4.

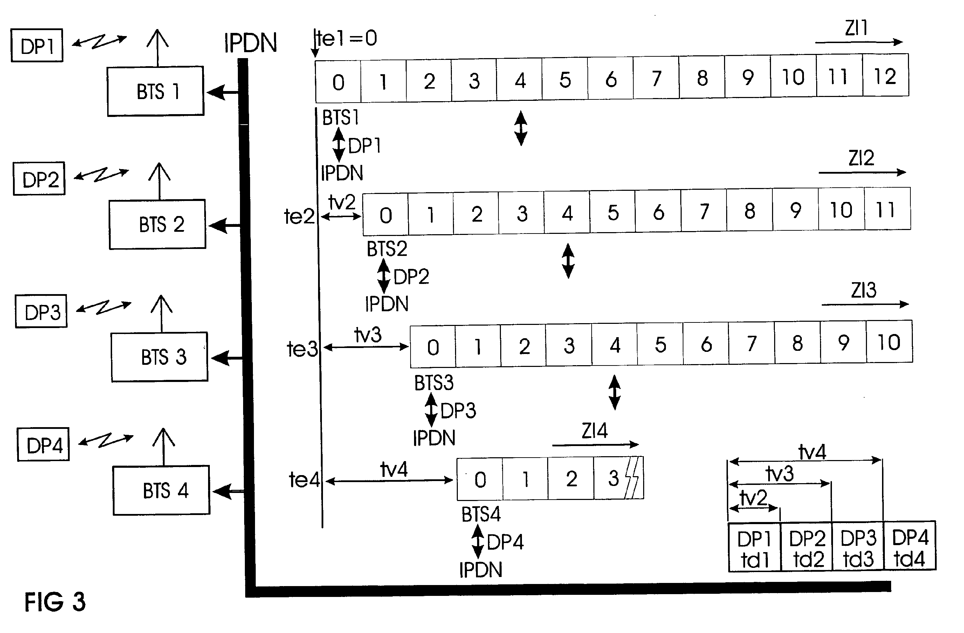

FIG 3 zeigt vergleichend zu FIG 2 eine erfindungsgemäße Datenpaketübertragung. Wieder werden die Basisstationen BTS1 bis BTS4 zum gleichen Zeitpunkt te1=te2=te3=te4=0 in Betrieb genommen.

Erfindungsgemäß beginnen die Basisstationen mit ihrer jeweiligen internen Zeitintervallzählung (bezogen auf die Basisstation BTS1) erst nach Ablauf einer der jeweiligen Basisstation BTS2, BTS3 und BTS4 zugeordneten Verzögerungszeit tv2, tv3 und tv4.

Die Verzögerungszeiten tv2 bis tv4 werden entsprechend der Reihenfolge der Datenpakete DP1 bis DP4 im IP-Datennetz IPDN derart gewählt, dass während eines Zeitpunkts genau die Basisstation das ihr zugeordnete Datenpaket übertragen bekommt, deren Datenpaket zu diesem Zeitpunkt festnetzseitig auch zur Verfügung steht.

Die Verzögerungszeit tv2 wird bei der Basisstation BTS2 so gewählt, dass deren Zeitintervall ZI2=0 mit dem Zeitintervall ZI1=1 der ersten Basisstation zusammenfällt. Die Verzögerungszeit tv2 entspricht einer festnetzseitigen zeitlichen Dauer td1 des der ersten Basisstation zugeordneten Datenblocks DP1. Entsprechend gilt für die Verzögerungszeit tv3 der dritten Basisstation BTS3, die sich aus der zeitlichen Dauer td1 des Datenblocks DP1 und aus der zeitlichen Dauer td2 des Datenblocks DP2 zusammensetzt. Dies wird für weitere Basisstationen sinngemäß fortgesetzt.

Zusammenfassend wird die Verzögerungszeit mit 1<j<n einer j-ten Basisstation gemäß der Formel berechnet: 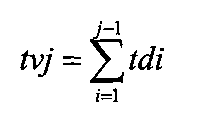 wobei die erste Basisstation BTS1 als Referenz dient und deren Verzögerungszeit tv1=0 ist.

Die einzelnen Verzögerungszeiten tv2 bis tv4 werden mit Hilfe einer Synchronisationsnachricht an die jeweilige Basisstation BTS2 bis BTS4 übermittelt, wobei die Verzögerungszeiten tv2 bis tv4 mit Hilfe einer den vier Basisstationen BTS1 bis BTS4 gemeinsam zugeordneten festnetzseitigen "Packet-Control-Unit" festgelegt werden. Die Packet-Control-Unit steuert dabei auch den festnetzseitigen Datenpaket-Transport.
Idealerweise kann durch das erfindungsgemäße Verfahren auf eine netzarmseitige Zwischenspeicherung der Datenpakete vollständig verzichtet werden.

Ist es systembedingt möglich, nur einige der Basisstationen eines Netzarms mit ideal gestalteten Verzögerungszeiten zu versehen, so wird doch im Ganzen gesehen der Bedarf an Zwischenpufferspeicher minimiert und der Datendurchsatz bei den einzelnen Basisstationen im Durchschnitt erhöht.

## Patentansprüche

1. Verfahren zur Übertragung von n Datenpaketen (DP1, DP2, DP3, DP4) zwischen einem Netzarm eines IP-Datennetzes (IPDN) einerseits und seriell an den Netzarm angeschalteten n Basisstationen (BTS1, BTS2, BTS3, BTS4), die zu einem im wesentlichen gleichen Zeitpunkt (te1 bis te4) in Betrieb genommen wurden, andererseits, wobei die n Datenpakete (DP1, DP2, DP3, DP4) einerseits seriell aufeinanderfolgend über den Netzarm und andererseits mit Hilfe eines Zeitschlitz-Vielfachzugriffs-Verfahrens von den n Basisstationen (BTS1 bis BTS4) über ein Funknetz übertragen werden,
- bei dem mit 1≤j≤n einer j-ten Basisstation (BTS1 bis BTS4) eine j-te Verzögerungszeit (tv1, tv2, tv3, tv4) und ein j-tes Datenpaket (DP1 bis DP4) zur Übertragung zugeordnet wird,
- bei dem bei der j-ten Basisstation (BTS1 bis BTS4) intern ab einem Inbetriebnahme-Zeitpunkt (te1, te2, te3, te4) nach Ablauf der ihr zugeordneten j-ten Verzögerungszeit (tv1 bis tv4) Zeitintervalle (ZI1, ZI2, ZI3, ZI4) gezählt werden und zu vorbestimmten Zeitintervallen (ZI1 bis ZI4) das jeweils zugeordnete j-te Datenpaket (DP1 bis DP4) zwischen der j-ten Basisstation (BTS1 bis BTS4) und dem Netzarm des IP-Datennetzes (IPDN) übertragen wird, wobei das j-te Datenpaket (DP1 bis DP4) netzarmseitig jeweils eine j-te zeitliche Dauer (td1, td2, td3, td4) aufweist, und
- bei dem die den n Basisstationen zugeordneten Verzögerungszeiten in Abhängigkeit von der zeitlichen Dauer der Datenpakete bestimmt werden.

2. Verfahren nach Anspruch 1, **dadurch gekennzeichnet, dass** mit 1<j≤n die j-te Verzögerungszeit tvj (tv2 bis tv4) der j-ten Basisstation (BTS2 bis BTS4) errechnet wird aus: 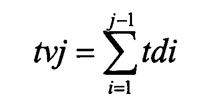 und eine erste Basisstation (BTS1) mit einer Verzögerungszeit tv1=0 als Referenz dient.

3. Verfahren nach Anspruch 1 oder 2, **dadurch gekennzeichnet, dass** während der Inbetriebnahme netzarmseitig an jede der n Basisstationen (BTS1 bis BTS4) eine Synchronisationsnachricht mit der ihr zugeordneten Verzögerungszeit tvj (tv1 bis tv4) übertragen wird.

4. Verfahren nach Anspruch 3, **dadurch gekennzeichnet, dass** die Zuweisung der Datenpakete und der Synchronisationsnachrichten zu den jeweiligen Basisstationen mit Hilfe einer den n Basisstationen gemeinsam zugeordneten Packet-Control-Unit erfolgt.

5. Verfahren nach einem der vorhergehenden Ansprüche, **dadurch gekennzeichnet, dass** die Übertragung der Datenpakete mit Hilfe des GSM-Standards erfolgt.

6. Verfahren nach einem der vorhergehenden Ansprüche, **dadurch gekennzeichnet, dass** durch die Datenpakete GPRS-Daten oder Sprachdaten übertragen werden.
